Europäisches Patentamt

European Patent Office

Office européen des brevets

(11) Publication number: · **0 057 843**
**B1**

(12) EUROPEAN PATENT SPECIFICATION

(45) Date of publication of patent specification: **24.04.85**

(21) Application number: **82100465.2**

(22) Date of filing: **23.01.82**

(51) Int. Cl.⁴: **A 01 F 15/00**

(54) Baling machine.

(30) Priority: **04.02.81 FR 8102130**

(43) Date of publication of application:
**18.08.82 Bulletin 82/33**

(45) Publication of the grant of the patent:
**24.04.85 Bulletin 85/17**

(84) Designated Contracting States:
**DE FR GB IT NL**

(56) References cited:
**FR-A-2 226 101**
**FR-A-2 344 215**
**FR-A-2 445 688**
**US-A-4 061 195**
**US-A-4 229 934**

(73) Proprietor: **JOHN DEERE (Société Anonyme)**
**8, Quai de la Madeleine**
**F-45000 Orléans (FR)**

(72) Inventor: **Giani, Angel**
**Avenue Jean Dominique**
**F-70100 Gray-la-Ville (FR)**

(74) Representative: **Collins, Geoffrey Stainton et al**
**c/o Reddie & Grose 16 Theobalds Road**
**London WC1X 8PL (GB)**

Courier Press, Leamington Spa, England.

## Description

This invention relates to a baling machine, for forming cylindrical bales of crop material, having: a main frame; draft means, for attaching the machine to a tractor, the main frame being connected at an upwardly extending pivot axis to the draft means; an upwardly and downwardly swingable rear gate assembly through which a formed bale can be dropped at its upward position so that the assembly overlies the dropped bale, and power means, connected between the main frame and the draft means, which can swing the frame laterally about the said pivotal connection between a straight-ahead baling position and a position angled therefrom.

Machines towed by a tractor, for forming large cylindrical bales of hay are known in which, as the machine advances, the crop is removed from a windrow by a pick-up mechanism and delivered rearwardly to a baling chamber where it is rolled into a bale between an upper and lower belt conveyor running in opposite directions, the bale rotating about a horizontal axis.

One such machine is described in GB—A—1477260. When a full sized bale has been formed it is dropped onto the ground from the rear of the machine through a gate assembly the gate being swung rearwardly and upwardly. The gate then overlies part of the dropped bale. Therefore for the gate to be closed without fouling the bale, it is necessary either to move the machine or the bale. Normally the machine is driven rearwardly, the gate opened, the bale dropped, the baler driven forwardly until the gate clears the bale, and finally the gate closed cleanly.

Other solutions to this problem have also been proposed, such as pushing the bale out of and away from the baler (see FR—A—2445688) or tilting the baler to roll the bale off the rear of the baler (see US—A—4229934).

A baler has also been proposed in US—A—4065914 corresponding to FR—A—2344215 of which the frame is swingable about a vertical pivot by means of a piston and cylinder unit so that the baler can be steered at varying angles to the windrow in order to promote uniform bale formation.

The present invention provides a baler which eliminates the need for reversing the tractor for clean release of a bale, for tilting the baler or pushing the bale to make it roll on the ground.

According to the present invention the main frame, draft means and power means are constructed and arranged to swing the main frame laterally through such an angle from the straight-ahead position as to permit a bale dropped at the said angled position to be cleared by the gate assembly on closing at the straight-ahead position.

The angle through which the main frame will need to swing from the baling position will usually be 90° or more, but will depend largely on the shape and size of the gate assembly.

Thus on completion of a bale, the tractor is stopped and the power means, which can conveniently be a piston and cylinder unit, is operated to swing the main frame laterally to its angled position relative to the tractor. The rear gate assembly is raised and the bale is dropped. The piston and cylinder unit is operated once more to return the main frame to the baling position, and finally the gate assembly is lowered cleanly of the bale. It is therefore not necessary for the tractor to be manoeuvred back and forth during bale unloading.

An embodiment of the invention will now be described with reference to the accompanying diagrammatic drawings in which:

Fig. 1 is an elevational view of a baling machine for forming large cylindrical bales of hay looking from the front and somewhat to the left hand side of the machine when in a position for baling; and

Fig. 2 is a side view of the machine of Fig. 1 in a position, angled from that in Fig. 1, at which a formed bale has been unloaded.

In the drawings, the machine includes a mobile main frame 10 mounted on a pair of wheels 12. The main frame includes a pair of upright, opposite, fore-and-aft extending left and right side walls 14 and 16 which define a baling chamber between them. A transverse beam 18 connects the forward ends of the side walls 14, 16 and a hollow draft member in the form of a tongue 20 which is connected to the beam 18 extends forwardly for attaching the baler to a tractor (not shown) having a conventional rear power take-off mechanism. The main frame also includes a transverse upper beam 22 interconnecting the side walls 14, 16 above the beam 18.

A pick-up mechanism 24, which is of conventional construction and will not therefore be described in detail, is mounted for vertical adjustment on the main frame 10 by a pair of vertically swingable arms 26, the pick-up mechanism spanning the width of the main frame forwardly of the baling chamber and being operative to elevate the crop from a windrow on the field as the machine advances and to deliver it rearwardly to a pair of transverse, oppositely rotating compressor rolls 28, 30 which pass the crop in the form of a mat onto a belt-type conveyor 32. The conveyor 32 spans the width of the machine between the side walls 14, 16 and includes an endless belt 34 which is trained around the lower compressor roll 30 and a rear roller 36. A pair of intermediate rollers 38 and 40 also extends between the opposite side walls and supports the upper run of the belt 34, the rollers 36, 38, 40 lying on substantially the same horizontal plane as the lower compressor roll 30 so that the upper run of the conveyor 32 is substantially horizontal.

An upper belt-type conveyor 42 is disposed between the opposite side walls 14, 16 above the lower conveyor 32 and includes a plurality of belts 44 that are disposed side by side across the width of the machine. The belts are trained around a lower front roller 46, an upper front roller 48, and a pair of upper intermediate rollers 50 and 52, all of which extend between the opposite side walls 14, 16 and are engaged by the inner faces of the belts 44.

A rear gate assembly 54 includes a pair of inner arms 56, having their forward ends respectively connected to the opposite side walls 14, 16 on pivots 58, and a pair of outer arms 60 respectively pivotally connected to the rearward ends of the inner arms 56 on transverse pivots 62 only the arms of the left hand side of the machine being shown. A pair of links 64 respectively extends between the upper ends of the outer arms 60 above the pivots 62 and brackets 66 on the opposite side walls 14, 16. A lower rear roller 68 runs between the lower ends of the outer arms 60, whilst an upper rear roller 70 extends between the outer arms 60 coaxial with the pivots 62, conveyor 42 also being trained around the rollers 68 and 70. Two hydraulic cylinders 72 (one cylinder only being shown) respectively extend between the opposite side walls 14, 16 and the inner arms 56 for swinging the arms in unison about their pivots 58 to open or close the gate assembly 54.

The upper and lower conveyors 42, 32, as well as the compressor rolls 28, 30, a stripper roller 74 which is disposed below the roller 46, and the pick-up mechanism 24 are driven by conventional belt drives on the left side of the machine, the power for the belt drives being supplied as usual through a fore and aft driveshaft (not shown) above the implement tongue 20, the forward end of the driveshaft being connectible to the tractor power take-off mechanism. The rearward end of the driveshaft is connected to the transverse driveshaft (also not shown) through conventional bevel gearing, the left end of the transverse shaft providing the input for the various belt drives to the driven components.

Initially during the bale forming operation, the lower rear roller 68 is disposed above the front intermediate lower conveyor roller 38, and the belts 44 are inclined upwardly and forwardly from the lower front roller 46. As the crop material is delivered in a mat on top of the upper run of the lower conveyor 32, the mat moves rearwardly until it engages the upwardly and forwardly moving lower run of the upper set of belts, which causes the mat of crop material to start to roll. The transverse stripper roller 74 is disposed immediately to the rear of the upper compressor roll 28 and directly below the lower front roller 46 to strip the crop material from the belts 44, so that the material does not pass out between the upper compressor roll 28 and the roller 46, the stripper roller 74 defining the forward end of the baling chamber and the shiftable rear roller 68 defining the rearward end. As the bale grows, the rear gate assembly 54 swings rearwardly, the links 64 causing the lower end of the outer arms 60 to move approximately in a straight line until the rear roller 68 is above the rearward end of the lower conveyor 32.

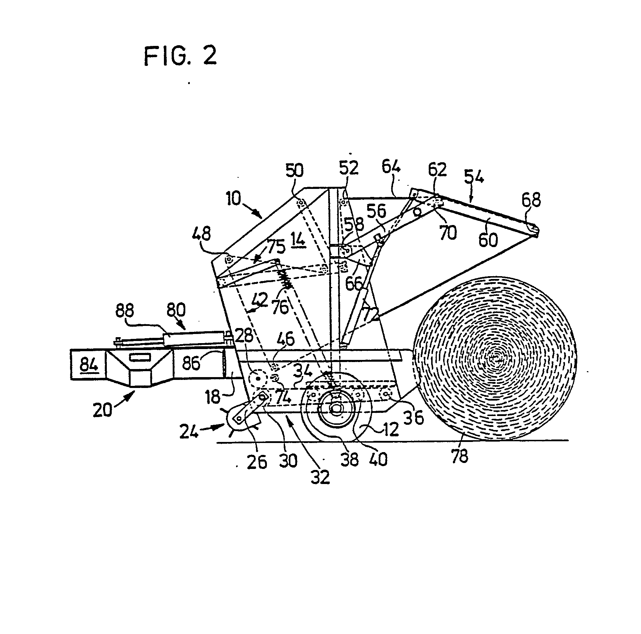

Of course, as the bale grows, the belts 44 require substantially increased distances between the lower rear roller 68 and the lower front roller 46, and a belt take-up mechanism 75, of which one spring 76 of a pair on either side of the machine is shown in Fig. 2, is provided to give the necessary belt length. The springs 76 supply an increasing tension in the belts 44 as the bale gets bigger, the tension in the upper belts compressing the crop into the bale. Details of the take-up mechanism 75 have been omitted from the drawings as it is conventional.

When the bale is fully formed the tractor driver normally stops further forward movement of the baling machine to interrupt the flow of crop material delivered by the pick-up mechanism 24. The driver operates a valve (not shown) causing the cylinders 72 to extend and thus the rear gate assembly 54 to swing upwardly so that the fully formed bale, numbered 78, is dropped through the gate onto the ground as can be seen in Fig. 2. The gate assembly 54 then overlies the bale 78 and could not be closed with the machine and the bale in this position.

In order to avoid having to manoeuvre the tractor back and forth, there is provided an arrangement 80 for swinging the main frame 10 through an angle of 90° in relation to the tractor. The details of this arrangement will now be described.

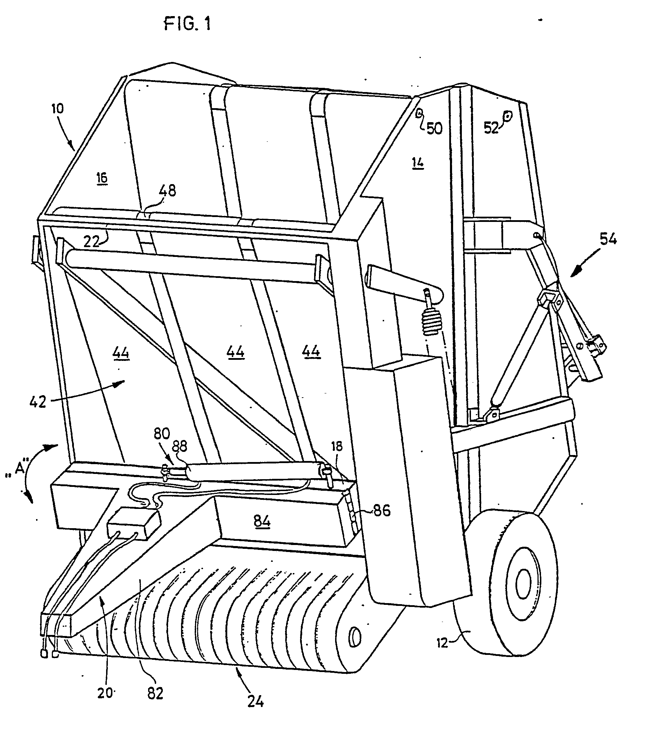

The tongue 20 is T-shaped in plan view, its shank portion 82 diverging rearwardly and the forward end of the shank portion 82 being connected by conventional means to the tractor. The flange portion 84 of the tongue is pivotally attached at its left hand end to the transverse beam 18 by a vertical hinge 86 so that the beam 18, and thus the main frame 10, can swing in the direction of arrow A in Fig. 1.

An hydraulic piston and cylinder unit 88 controlled by a manually operated valve from the tractor gives the power for the swinging movement. The unit 88 is pivotally connected at either end to the flange 84 and the beam 18 so that contraction of the unit will cause the beam 18 to be aligned with the flange 84, in the position shown in Fig. 1, so that they both lie transversely of the direction of travel in "the baling position". Expansion of the piston and cylinder unit 88 will, on the other hand, cause the beam 18 to swing away from the flange 84 about the hinge 86 until, at the end of the stroke, the beam 18 is at an angle of 90° to the flange 84 at the "angled position" shown in Fig. 2.

Thus the sequence of operations for discharge of a bale is as follows. After the tractor driver has stopped his vehicle when a full size bale has been formed as mentioned above, he moves the manual control for the piston and cylinder unit 88 to expand the unit. The frame 10 swings to the Fig. 2 angled position. He then opens the rear gate assembly 54 and the bale is dropped. Again, he operates the manual control to cause the piston and cylinder unit 88 to contract and thus the frame 10 to swing back to the Fig. 1 baling position. The rear gate assembly 54 can then be closed and baling recommenced.

If required, an automatic lock can be provided to maintain the beam 18 in the baling position very rigidly attached to the flange portion 84, the lock being released just as the piston and cylinder unit 88 is about to expand.

## Claims

1. A baling machine, for forming bales of crop material, having: a main frame (10); draft means (20), for attaching the machine to a tractor, the main frame (10) being connected at an upwardly extending pivot axis to the draft means (20); an upwardly and downwardly swingable rear gate assembly (54) through which a formed bale (78) can be dropped at its upward position so that the assembly overlies the dropped bale; and power means (88), connected between the main frame (10) and the draft means (20), which can swing the frame (10) laterally about the said pivotal connection (86) between a straight-ahead baling position and a position angled therefrom, characterised in that the main frame (10), draft means (20) and power means (88) are constructed and arranged to swing the main frame (10) laterally through such an angle from the straight-ahead position as to permit a bale (78) dropped at the said angled position to be cleared by the gate assembly (54) on closing at the straight-ahead position.

2. A baling machine according to claim 1 in which the power means comprise a piston and cylinder unit (88).

3. A baling machine according to claim 1 or 2 in which the draft means (20) include a beam (84) transverse of the direction of travel of the machine.

4. A baling machine according to claim 3 in which the main frame includes a beam (18) transverse of the direction of travel of the machine pivotally attached at one end to the beam of the draft means (20).

5. A baling machine according to claim 3 or 4 in which the draft means (20) is T-shaped in plan view, its said beam (18) constituting a flange of the "T".

6. A baling machine according to any preceding claim in which the frame (10) is arranged to be swung laterally between a said baling position and a said angled position substantially at right angles thereto at which the frame is disposed transversely to the direction of travel.

## Revendications

1. Presse à balles pour former des balles à partir de produits de récolte comprenant: — un châssis principal (10), des moyens d'attelage (20) pour atteler la presse à un tracteur, le châssis principal (10) étant relié aux moyens d'attelage (20) par un axe formant pivot s'étendant vers le haut; un système de porte arrière (54) pouvant basculer vers le haut et vers le bas et par lequel une balle formée (78) peut être déchargée dans sa position supérieure, de sorte que le système se trouve au-dessus de la balle déchargée; et des moyens d'actionnement (88) prévus entre le châssis principal (10) et les moyens d'attelage (20), qui peuvent faire pivoter le châssis (10) latéralement autour de cette liaison formant pivot (86) entre une position de formation des balles et de marche en ligne droite et une position angulaire par rapport à la précédente, caractérisée en ce que le châssis principal (10), les moyens d'attelage (20) et les moyens d'actionnement (88) sont construits et disposés de façon à faire pivoter le châssis principal (10) latéralement sur un angle tel, à partir de la position de marche en ligne droite, qu'une balle (78) déchargée dans cette position angulaire puisse se trouver à l'écart du système de porte (54) lors de la fermeture de celui-ci dans la position de marche en ligne droite.

2. Presse à balles suivant la revendication 1, caractérisée en ce que les moyens d'actionnement comprennent un vérin (88).

3. Presse à balles suivant la revendication 1 ou 2, caractérisée en ce que les moyens d'attelage (20) comprennent une poutre (84) orientée transversalement à la direction de déplacement de la presse.

4. Presse à balles suivant la revendication 3, caractérisée en ce que le châssis principal (10) comprend une poutre (18) orientée transversalement à la direction de déplacement de la presse, reliée à pivotement par une extrémité à la poutre des moyens d'attelage (20).

5. Presse à balles suivant la revendication 3 ou 4, caractérisée en ce que les moyens d'attelage (20) ont en plan une forme de T, cette poutre (18) des moyens d'attelage constituant la branche transversale du T.

6. Presse à balles suivant l'une quelconque des revendications précédentes, caractérisée en ce que le châssis principal (10) est disposé de manière à pouvoir pivoter latéralement entre cette position de formation des balles et une position angulaire sensiblement perpendiculaire à la précédente, dans laquelle le châssis est disposé transversalement à la direction de déplacement.

## Patentansprüche

1. Ballenbildungsmaschine zum Formen von Ballen aus Erntematerial, welche aufweist: einen Hauptrahmen (10); Zugmittel (20) zum Befestigen der Maschine an einen Schlepper, wobei der Hauptrahmen (10) an einer sich nach oben erstreckenden Schwenkachse mit den Zugmitteln (20) verbunden ist; eine nach oben und nach unten schwenkbare rückärtige Gatteranordnung (54), durch die ein geformter Ballen (78) in ihrer oberen Stellung fallengelassen werden kann, so daß die Anordnung den fallengelassenen Ballen überlagert; und zwischen den Hauptrahmen (10) und die Zugmittel (20) gekuppelte Kraftmittel (88), welche den Rahmen (10) seitlich um die besagte Schwenkverbindung (86) zwischen einer Geradeaus-Ballenbildungsstellung und einer dazu abgewinkelten Stellung schwenken kann, dadurch gekennzeichnet, daß der Hauptrahmen (10), die Zugmittel (20) und die Kraftmittel (88) so ausgebildet und angeordnet sind, daß sie den Hauptrahmen (10) seitlich durch solch einen Winkel von der Geradeausstellung schwenken können, um zu gestatten, daß ein bei der besagten abgewinkelten Stellung fallengelassener Ballen (78) von der Gatteranordnung (54) beim Schließen in der Geradeausstellung freigegeben wird.

2. Ballenbildungsmaschine nach Anspruch 1, in der die Kraftmittel eine Kolben und Zylinder-Einheit (88) umfassen.

3. Ballenbildungsmaschine nach Anspruch 1 oder 2, bei der die Zugmittel (20) einen Träger (84) umfassen, der quer zu der Fahrtrichtung der Maschine verläuft.

4. Ballenbildungsmaschine nach Anspruch 3, bei der der Hauptrahmen einen Träger (18) umfaßt, der quer zur Fahrtrichtung der Maschine angeordnet und an einem Ende an den Träger der Zugmittel (20) schwenkbar angebracht ist.

5. Ballenbildungsmaschine nach Anspruch 3 oder 4, bei der das Zugmittel (20) in Draufsicht T-förmig ist, wobei ihr besagter Träger (18) einen Flansch des "T" bildet.

6. Ballenbildungsmaschine nach irgendeinem der voranstehenden Ansprüche, bei der der Rahmen (10) so angeordnet ist, daß er seitlich zwischen einer besagten Ballenbildungsstellung und einer besagten abgewinkelten Stellung im wesentlichen in rechten Winkeln dazu schwenkbar ist, bei der der Rahmen quer zur Fahrtrichtung ausgerichtet ist.

FIG. 1

FIG. 2